# EUROPÄISCHE PATENTSCHRIFT

(11) **EP 1 398 907 B1**
(45) Veröffentlichungstag und Bekanntmachung des Hinweises auf die Patenterteilung: **08.12.2010**
(21) Anmeldenummer: 03102602.4
(22) Anmeldetag: 20.08.2003
(51) Int. Cl.: H04L 12/24, H04L 12/56

(54) **Verfahren zur Kontrolle von Übertragungsressourcen eines paketorientierten Kommunikationsnetzes bei Topologieänderungen**
Method of control of transmission resource in a packetized network when topology changes occur
Méthode de contrôle de ressource de transmission dans un réseau de paquets de données lors des changements de topologie

(30) Priorität: 10.09.2002 DE 10241955
(43) Veröffentlichungstag der Anmeldung: 17.03.2004
(73) Patentinhaber: SIEMENS AKTIENGESELLSCHAFT, 80333 München (DE)
(72) Erfinder: Glasmann, Josef, 85276 Pfaffenhofen (DE); Tromparent, Marie-Mélisande, 80939 München (DE); Müller, Harald, Dr., 82205 Gilching (DE); Totzke, Jürgen, 85586 Poing (DE)
(74) Vertreter: Fritzsche, Thomas

(56) Entgegenhaltungen:
- EP-A- 0 895 373
- EP-A- 1 098 476
- WO-A-02/21797

## Beschreibung

In vielen paketorientierten Kommunikationsnetzen, wie beispielsweise lokalen Netzen oder Weitverkehrsnetzen, wird für Verbindungen zwischen Endgeräten dieser Kommunikationsnetze keine Dienstgüte garantiert, wenn keine zusätzlichen Vorkehrungen getroffen werden. Die Dienstgüte einer Verbindung wird häufig auch als "Quality of Service" (QoS) bezeichnet und kann unterschiedliche Übertragungs- und Verbindungsressourcen, wie z.B. die Übertragungsbandbreite, die Übertragungsgeschwindigkeit, die Übertragungsverzögerung und/oder eine zulässige Fehlerrate umfassen.

Bei zeitgemäßen Kommunikationssystemen, die häufig auf solchen paketorientierten Kommunikationsnetzen basieren, sind zur Sicherung einer vorgegebenen Dienstgüte sogenannte Ressourcenmanager vorgesehen. Diese sind jeweils einem Kommunikationsnetz oder einem Teilnetz zugeordnet und verwalten dessen jeweilige Übertragungsressourcen. Bei einem Ressourcenmanager können für aufzubauende Verbindungen jeweils vorgebbare Übertragungsressourcen verbindungsspezifisch reserviert werden. Der Ressourcenmanager lässt eine Verbindung nur zu, wenn deren Ressourcenbedarf die für den Leitweg der Verbindung noch verfügbaren Übertragungsressourcen nicht überschreitet. Nach einer erfolgreichen Reservierung von Übertragungsressourcen überwacht der Ressourcenmanager die permanente Verfügbarkeit der reservierten Übertragungsressourcen für eine jeweilige Verbindung.

Ein derartiger Ressourcenmanager zur Verwaltung von Kommunikationsressourcen ist z.B. aus der Druckschrift EP 895 373 A2 bekannt.

Um feststellen zu können, ob für eine Verbindung angeforderte Übertragungsressourcen auf dem Leitweg dieser Verbindung durch das Kommunikationsnetz verfügbar sind, benötigt der Ressourcenmanager Informationen über die Topologie des Kommunikationsnetzes, d.h. über die Vernetzungsstruktur der Netzknoten und Linkleitungen und über deren jeweilige Übertragungskapazität. Derartige, die Topologie eines Kommunikationsnetzes spezifizierende Topologieinformationen werden häufig auch als Topologiebild bezeichnet.

Im praktischen Betrieb eines Kommunikationsnetzes kann sich dessen Topologie gelegentlich ändern. Eine solche Topologieänderung kann z.B. durch eine administrative Konfigurations-änderung oder durch einen Ausfall oder eine Wiederherstellung einer Netzkomponente verursacht werden. Infolgedessen kann im Kommunikationsnetz eine dynamische Änderung von Verbindungsleitwegen auf Schicht 2 (z.B. mittels sog. spanning-tree-Verfahren) und/oder Schicht 3 (z.B. mittels Routing-Verfahren wie RIP oder OSPF) des OSI Referenzmodells erfolgen.

Ein Verfahren zum Erkennen von Netzwerkverbindungen ist aus der Druckschrift EP 1 098 476 A1 bekannt.

Ein Problem einer derartigen Topologieänderung besteht darin, dass die in einem Ressourcenmanager vorgenommene Reservierung oder Belegung von Übertragungsressourcen dann nicht mehr mit der geänderten Topologie des Kommunikationsnetzes konsistent ist. Dies kann zu einer Überbelegung von Übertragungsressourcen und damit zu einer Verschlechterung der Dienstgüte (QoS, Quality of Service) bestehender und neu aufzubauender Echtzeitverbindungen führen.

Aus der Druckschrift WO 02/21797 A1 ist ein Ressourcenmanager für ein IP-Telefoniesystem bekannt, der das IP-Netzwerk betreffende Routing- und Ressourceninformationen sammelt und bei der Ressourcenvergabe berücksichtigt. Die Ressourcentabellen werden dabei insbesondere auch bei Topologieänderungen aktualisiert. Eine zeitnahe und für die Kommunikationsdienste transparente Aktualisierung ist jedoch häufig nicht gewährleistet.

Es ist Aufgabe der vorliegenden Erfindung ein Verfahren zur Kontrolle von Übertragungsressourcen eines paketorientierten Kommunikationsnetzes anzugeben, das eine adaptive Ressourcenkontrolle bei Topologieänderungen des Kommunikationsnetzes erlaubt.

Gelöst wird diese Aufgabe durch ein Verfahren mit den Merkmalen des Patentanspruchs 1.

Zur Kontrolle von Übertragungsressourcen eines paketorientierten Kommunikationsnetzes bei Topologieänderungen ist ein Ressourcenmanager vorgesehen, der eine Belegung der Übertragungsressourcen, insbesondere durch Verbindungen, anhand von die Topologie des Kommunikationsnetzes betreffenden Topologiedaten kontrolliert. Unter einer Topologieänderung seien im Folgenden auch Änderungen einer Netzkonfiguration oder Änderungen von Betriebsbedingungen des Kommunikationsnetzes verstanden. Erfindungsgemäß wird infolge einer Topologieänderung des Kommunikationsnetzes eine Topologieänderungsinformation zum Ressourcenmanager übermittelt. Der Ressourcenmanager wird infolgedessen dazu veranlasst, neue Topologiedaten zu erfassen, die die geänderte Topologie des Kommunikationsnetzes betreffen. Anhand der erfassten, neuen Topologiedaten bildet der Ressourcenmanager eine bestehende Belegung der Übertragungsressourcen auf die geänderte Topologie des Kommunikationsnetzes ab.

Ein wesentlicher Vorteil der Erfindung besteht darin, dass der Ressourcenmanager Topologieänderungen, die in der Regel eine temporäre Inkonsistenz eines im Ressourcenmanager vorliegenden Topologiebildes mit der tatsächlichen Topologie des Kommunikationsnetzes zur Folge haben, frühzeitig erkennen kann und darauf reagieren kann. Durch die Abbildung der bestehenden Ressourcenbelegung auf die geänderte Topologie können Ressourcengarantien für vor der Topologieänderung bestehende Verbindungen, soweit mit der neuen Topologie vereinbar, aufrecht erhalten werden. Zudem können die nach der Topologieänderung vorhandenen Übertragungsressourcen besonders effizient genutzt werden.

Vorteilhafte Ausführungsformen und Weiterbildungen der Erfindung sind in den abhängigen Ansprüchen angegeben.

Vorteilhafterweise kann der Ressourcenmanager infolge des Empfangs der Topologieänderungsinformation vorübergehend in einen statischen Ressourcenbelegungsmodus übergehen. Im statischen Ressourcenbelegungsmodus erfolgt die Belegung der Übertragungsressourcen vorzugsweise nach einem von der Belegung der Übertragungsressourcen oder von dynamischen Änderungen des Topologiebildes bzw. der Topologiedaten unabhängigen Verfahren.

Der statische Ressourcenbelegungsmodus wird vorzugsweise dann verlassen, wenn wieder ein mit der geänderten Topologie konsistentes Topologiebild im Ressourcenmanager vorliegt. Der Ressourcenmanager kann vom Vorliegen eines konsistenten Topologiebildes ausgehen, wenn während einer vorgegebenen Zeitdauer keine weitere Topologieänderungsinformation empfangen wird. Entsprechend kann ein Empfang einer weiteren Topologieänderungsinformation während des statischen Ressourcenbelegungsmodus diesen um eine vorgegebene Zeitdauer verlängern. Die Zeitdauer kann dabei abhängig vom Ausmaß der Topologieänderung und/oder von der Größe des Kommunikationsnetzes sein.

Weiterhin kann der Ressourcenmanager den statischen Ressourcenbelegungsmodus nach der Erfassung der neuen Topologiedaten oder nach der Abbildung der bestehenden Ressourcenbelegung auf die geänderte Topologie verlassen.

Ferner kann eine während des statischen Ressourcenbewegungsmodus erfolgende Ressourcenbelegung durch den Ressourcenmanager spezifisch markiert werden. Auf diese Weise können derartige Ressourcenbelegungen zu einem späteren Zeitpunkt erkannt und spezifisch behandelt werden.

Nach einer vorteilhaften Ausführungsform der Erfindung kann die Belegung der Übertragungsressourcen im statischen Ressourcenbelegungsmodus auf den vor der Topologieänderung vorliegenden Topologiedaten basieren. In diesem Fall können Verbindungen weiterhin gemäß der ursprünglichen Topologie vom Ressourcenmanager akzeptiert oder zurückgewiesen werden. Optional können an akzeptierten Verbindungen beteiligte Endeinrichtungen durch den Ressourcenmanager dazu veranlasst werden, ihren Ressourcenbedarf zu reduzieren, um die Wahrscheinlichkeit einer Überbelegung zu verringern.

Nach einer weiteren Ausführungsform der Erfindung kann der Ressourcenmanager im statischen Ressourcenbelegungsmodus unabhängig von der Belegung der Übertragungsressourcen Ressourcenanforderungen ablehnen und Ressourcenfreigaben zulassen. So können z.B. alle Verbindungsanforderungen abgelehnt und alle Verbindungsauslösungen bearbeitet werden.

Darüber hinaus kann mit der Topologieänderungsinformation eine Lokalisierungsangabe übermittelt werden, durch die ein von der Topologieänderung betroffener Bereich des Kommunikationsnetzes spezifiziert wird. Aufgrund der Kenntnis des betroffenen Bereichs kann der Ressourcenmanager im statischen Ressourcenbelegungsmodus nur diejenigen Ressourcenanforderungen ablehnen, die dem durch die Lokalisierungsangabe spezifizierten Bereich betreffen und alle anderen Ressourcenanforderungen anhand der vor der Topologieänderung vorliegenden Topologiedaten bearbeiten.

Der Ressourcenmanager kann ferner im Rahmen der Abbildung der bestehenden Ressourcenbelegung auf die geänderte Topologie prüfen, ob eine Überbelegung von Übertragungsressourcen auftritt. Bei Feststellen einer Überbelegung kann dann veranlasst werden, dass eine zu dieser Überbelegung beitragende Verbindung abgebaut wird, einer anderen Dienstgüteklasse zugeordnet wird, über einen anderen Leitweg geführt wird oder eine Kodierung mit verringertem Ressourcenbedarf verwendet. Auf diese Weise können Überbelegungen durch Beeinflussung einer oder einiger weniger Verbindungen gezielt beseitigt werden, wobei alle anderen Verbindungen keine Verschlechterung ihrer Dienstgüte erfahren.

Weiterhin können - vorzugsweise zur Vermeidung einer Überbelegung von Übertragungsressourcen - im Rahmen der Abbildung der bestehenden Ressourcenbelegung auf die geänderte Topologie jüngere Verbindungen gegenüber älteren Verbindungen und/ oder Sprachverbindungen gegenüber Verbindungen anderer Verbindungstypen und/oder Verbindungen mit einer benutzer- oder leistungsmerkmalabhängigen Verbindungspriorität und/oder Verbindungen mit verhältnismäßig geringem Ressourcenbedarf und/oder außerhalb des statischen Ressourcenbelegungsmodus aufgebaute Verbindungen gegenüber während des statischen Ressourcenbelegungsmodus aufgebauten Verbindungen bei einer Zuweisung von Übertragungsressourcen bevorzugt werden. Zu diesem Zweck können den Verbindungen in der Reihenfolge ihrer relativen Bevorzugung Übertragungsressourcen zugewiesen werden.

Gemäß einer vorteilhaften Weiterbildung der Erfindung können die Topologie des Kommunikationsnetzes betreffende Topologiedaten durch einen Topologiemanager erfasst und zum Ressourcenmanager übermittelt werden. Entsprechend kann der Topologiemanager bei Erkennen einer Topologieänderung eine Topologieänderungsinformation an den Ressourcenmanager übermitteln. Der Topologiemanager kann logisch oder physikalisch vom Ressourcenmanager getrennt sein oder in den Ressourcenmanager integriert sein. Ein Topologiemanager kann auch für mehrere Ressourcenmanager zuständig sein.

Ein Ausführungsbeispiel der Erfindung wird nachfolgend anhand der Zeichnung näher erläutert.

Dabei zeigen jeweils in schematischer Darstellung:
Figur 1 einen Ressourcenmanager innerhalb seiner Ressourcenmanager-Domäne und
Figur 2 ein paketorientiertes Kommunikationssystem mit mehreren, jeweils durch einen Ressourcenmanager verwal teten Ressourcenmanager-Domänen.

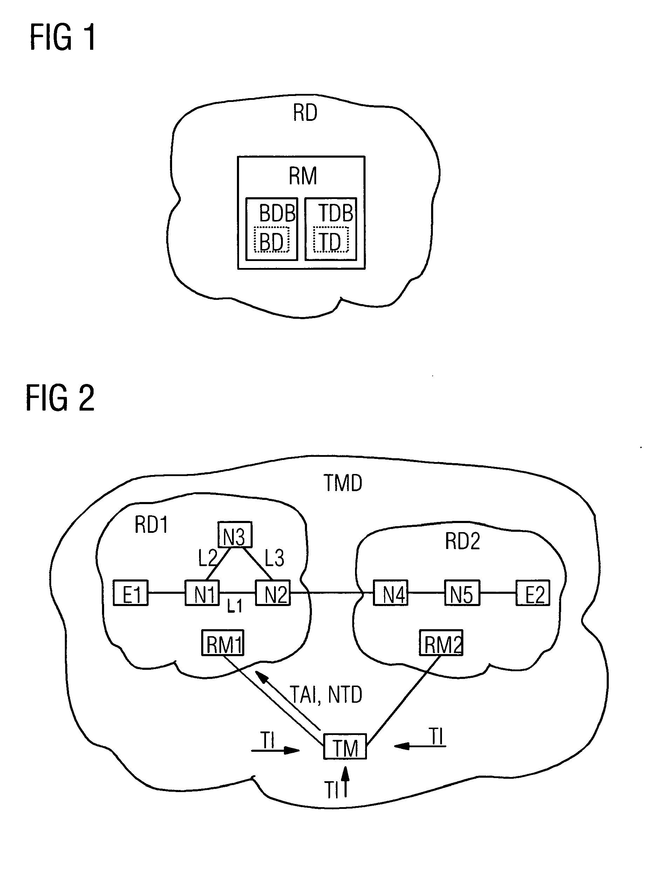

In **Figur 1** ist ein Ressourcenmanager RM zur Reservierung und Verwaltung von Übertragungsressourcen innerhalb einer Ressourcenmanager-Domäne RD schematisch dargestellt. Die Ressourcenmanager-Domäne RD ist ein paketorientiertes, vorzugsweise internetprotokollbasiertes Kommunikationsnetz, z.B. ein LAN (Local Area Network) oder WAN (Wide Area Network), oder ein Teilnetz desselben, für dessen Ressourcenverwaltung der Ressourcenmanager RM zuständig ist. Der Ressourcenmanager RM enthält eine Topologiedatenbank TDB mit darin gespeicherten Topologiedaten TD. Die Topologiedaten TD umfassen sowohl für Schicht 2 als auch für Schicht 3 des OSI-Referenzmodells relevante Topologieinformationen und spezifizieren die Knotenstruktur, Leitwegstruktur, Konvektivität sowie die Netzkonfiguration der Ressourcenmanager-Domäne RD. Die Gesamtheit der Topologiedaten TD spezifiziert die gesamte Topologie der Ressourcenmanager-Domäne RD und wird entsprechend als Topologiebild der Ressourcenmanager-Domäne RD bezeichnet.

Der Ressourcenmanager RM umfasst weiterhin eine Belegungsdatenbank BDB mit darin gespeicherten verbindungsspezifischen und/oder dienstgüteklassenspezifischen Belegungsdaten BD. Die Belegungsdaten BD spezifizieren eine jeweils aktuelle Belegung oder Reservierung von Übertragungsressourcen der Ressourcenmanager-Domäne RD durch Kommunikationsverbindungen. Die Belegungsdatenbank BDB wird entsprechend bei jedem Aufbau oder Abbau einer Verbindung aktualisiert.

Anhand der in der Belegungsdatenbank BDB gespeicherten, aktuellen Ressourcenbelegung sowie dem in der Topologiedatenbank TDB gespeicherten Topologiebild kann der Ressourcenmanager RM

Ressourcenanforderungen für aufzubauende Verbindungen bearbeiten. Dabei prüft der Ressourcenmanager RM, ob die aktuellen Ressourcenbelegungen aller Verbindungsabschnitte entlang eines jeweiligen Verbindungspfades erlauben, die Verbindung zusätzlich aufzubauen, ohne bereits über die Verbindungsabschnitte führende, andere Verbindungen hinsichtlich ihrer Dienstgüte zu beeinträchtigen.

In **Figur 2** ist ein paketorientiertes Kommunikationssystem mit einer durch einen Ressourcenmanager RM1 verwalteten Ressourcenmanager-Domäne RD1 und einer durch einen Ressourcenmanager RM2 verwalteten Ressourcenmanager-Domäne RD2 schematisch dargestellt. Für eine Erkennung und Überwachung der jeweiligen Topologie der Ressourcenmanager-Domänen RD1 und RD2 ist ein Topologiemanager TM zuständig. Die Ressourcenmanager-Domänen RD1 und RD2 gehören mithin einer vom Topologiemanager TM verwalteten Topologiemanager-Domäne TMD an.

Nach einer Variante des Ausführungsbeispiels kann die Funktionalität des Topologiemanagers TM auch in einem Ressourcenmanager, hier RM1 oder RM2, integriert sein.

Die Topologiemanager-Domäne TMD ist im vorliegenden Ausführungsbeispiel als internetprotokollbasiertes Kommunikationsnetz, z.B. zur Sprach-, Video- und/oder Multimedia-Echtzeitkommunikation, vorzugsweise gemäß der ITU-T-Empfehlung H.323 oder gemäß des IETF-Standard SIP (Session Initiation Protocol) realisiert. Die Ressourcenmanager-Domänen RD1 und RD2 sind Teilnetze dieser Topologiemanager-Domäne TMD.

Die Ressourcenmanager-Domäne RD1 weist eine Endeinrichtung E1 sowie Netzknoten N1, N2 und N3 auf. Der Netzknoten N1 ist hierbei mit dem Netzknoten N2 über eine Linkleitung L1, mit dem Netzknoten N3 über eine Linkleitung L2 sowie mit der Endeinrichtung E1 gekoppelt. Der Netzknoten N2 ist ferner über eine Linkleitung L3 mit dem Netzknoten N3 gekoppelt.

Die Ressourcenmanager-Domäne RD2 weist eine Endeinrichtung E2 sowie Netzknoten N4 und N5 auf. Der Netzknoten N5 ist dabei mit dem Netzknoten N4 sowie mit der Endeinrichtung E2 gekop pelt. Darüber hinaus ist der Netzknoten N4 domänenübergreifend mit dem Netzknoten N2 gekoppelt.

Die Endeinrichtungen E1 und E2 können beispielsweise Endgeräte zur Sprach-, Video- und/oder Multimedia-Echtzeitkommunikation, Personalcomputer oder darauf ablaufende Kommunikationsanwendungen oder Clients sein.

In einem Kommunikationsnetz gemäß der ITU-T-Empfehlung H.323 kann die Endeinrichtung E1 bzw. E2 über einen sog. Gatekeeper als zentrale Verbindungssteuerung mit dem zuständigen Ressourcenmanager RM1 bzw. RM2 kommunizieren. In einem SIPbasierten Kommunikationsnetz kann die Endeinrichtung E1 bzw. E2 hingegen über einen sog. SIP-Proxy mit dem zuständigen Ressourcenmanager RM1 bzw. RM2 kommunizieren. In einem Kommunikationsnetz ohne zentrale Verbindungssteuerung kann die Endeinrichtung E1 bzw. E2 direkt mit dem zuständigen Ressourcenmanager RM1 bzw. RM2 kommunizieren.

Zur Überwachung der Topologie der Topologiemanager-Domäne TMD erfasst der Topologiemanager TM laufend Topologieinformationen TI, die ihm aus dem Topologiemanager-Domäne TMD übermittelt werden. Auf diese Weise wird durch den Topologiemanager TM ein Topologiebild seiner Topologiemanager-Domäne TMD erstellt und laufend aktualisiert.

Die Topologieinformationen TI werden im Rahmen eines Routingprotokolls, wie beispielsweise OSPF (Open Shortest Path First), in Form von Alarm-Datenpaketen, wie z.B. sog. OSPF-, SNMP- (Simple Network Management Protocol) oder Configuration-Traps, in der Topologiemanager-Domäne TMD propagiert und vom Topologiemanager TM erfasst.

Der Topologiemanager TM übermittelt anhand seines Topologiebildes jeweils Topologiedaten TD zu den Ressourcenmanagern RM1 und RM2 zum Abspeichern in deren jeweiliger Topologiedatenbank TDB. Hierbei erhält jeder Ressourcenmanager RM1 bzw. RM2 nur dessen Ressourcenmanager-Domäne RM1 bzw. RM2 betreffende Topologiedaten TD. D.h. jedem Ressourcenmanager RM1 bzw. RM2 wird nur die für ihn relevante Teilansicht auf die Topologie vom Topologiemanager TM übermittelt.

Beim Eintreten einer Topologieänderung in der Topologiemanager-Domäne TD tritt vorübergehend eine Inkonsistenz zwischen der tatsächlichen Topologie der Topologiemanager-Domäne TMD und dem Topologiebild des Topologiemanagers TM bzw. einem Topologiebild des Ressourcenmanagers RM1 oder RM2 auf. Diese Inkonsistenzphase wird häufig auch als Instabilitätsphase bezeichnet. Derartige Topologieänderungen können z.B. durch Ausfall von Linkleitungen oder Netzknoten oder durch administrative Konfigurationsänderungen hervorgerufen werden.

Für das vorliegende Ausführungsbeispiel sei angenommen, dass sich die Topologie der Ressourcenmanager-Domäne RD1 durch eine Unterbrechung der Linkleitung L1 ändert, so dass die Netzknoten N1 und N2 nur noch über den Netzknoten N3 und die Linkleitungen L2 und L3 gekoppelt sind. Das Eintreten dieser Topologieänderung sowie deren Beschränkung auf die Ressourcenmanager-Domäne RD1 kann durch den Topologiemanager TM anhand der in der Topologiemanager-Domäne TMD propagierenden Topologieinformationen TI verhältnismäßig frühzeitig erkannt werden. Durch die Erfassung weiterer Topologieinformationen TI kann der Topologiemanager TM dann sein Topologiebild sukzessive wieder in Einklang mit der tatsächlichen, geänderten Topologie bringen.

Sobald der Topologiemanager TM das Eintreten der Topologieänderung erkennt, übermittelt er erfindungsgemäß eine Topolo gieänderungsinformation TAI zum Ressourcenmanager RM1 der von der Topologieänderung betroffenen Ressourcenmanager-Domäne RD1. Der Ressourcenmanager RM1 erkennt anhand der übermittelten Topologieänderungsinformation TAI, dass sein in der Topologiedatenbank TDB gespeichertes Topologiebild nicht mit der tatsächlichen Topologie seiner Ressourcenmanager-Domäne RD1 konsistent ist. Infolgedessen geht der Ressourcenmanager RM1 während dieser Inkonsitenzphase in einen statischen Ressourcenbelegungsmodus über. Die Inkonsistenzphase endet, wenn das Topologiebild des Ressourcenmanagers RM1 wieder mit der tatsächlichen Topologie seiner Ressourcenmanager-Domäne RD1 übereinstimmt.

Im statischen Ressourcenbelegungsmodus können Verbindungs- bzw. Ressourcenanforderungen auf unterschiedliche Weise durch den Ressourcenmanager RM1 bearbeitet werden:

Nach einer ersten Verfahrenvariante werden alle Verbindungsanforderungen abgelehnt und alle Verbindungsauslösungen bearbeitet. Auf diese Weise können Dienstgütegarantien für bestehende Verbindungen, soweit diese durch die Topologieänderung nicht unmittelbar betroffen sind, aufrecht erhalten werden. Sofern die Inkonsistenzphase verhältnismäßig kurz ist, kann eine Bearbeitung einer Verbindungsanforderung bis zum Ende der Inkonsistenzphase verzögert werden.

Nach einer zweiten Verfahrensvariante können Verbindungsanforderungen nach Maßgabe der ursprünglichen Topologie akzeptiert oder zurückgewiesen werden. Optional können bei Akzeptieren einer Verbindung daran beteiligte Endeinrichtungen, hier E1 und E2, dazu veranlasst werden, eine Kodierung (Codec) mit verringertem Übertragungsressourcenbedarf zu verwen den, um die Wahrscheinlichkeit einer Überbelegung von Ressourcen zu reduzieren.

Nach einer dritten, kombinierten Verfahrensvariante verwendet der Ressourcenmanager RM1 eine mit der Topologieänderungsinformation TAI übermittelte Lokalisierungsangabe, um den von der Topologieänderung betroffenen Bereich der Ressourcenmanager-Domäne RD1 zu erkennen. Die Lokalisierungsangabe kann z.B. die Anzahl der Knotendurchgänge (hops) im betroffenen Bereich spezifizieren. Im betroffenen Bereich wird dann die erste Verfahrensvariante und außerhalb davon die zweite Verfahrensvariante angewandt.

Das Ende der Inkonsistenzphase kann durch den Ressourcenmanager RM1 erkannt werden, indem bei jedem Empfang einer Topologieänderungsinformation TAI ein Zeitglied gestartet wird. Solange weitere Topologieänderungsinformationen TAI vor Ablauf des Zeitgliedes eintreffen, wird das Zeitglied erneut gestartet bzw. verlängert und die Inkonsistenzphase gilt als noch nicht beendet. Die vom Zeitglied jeweils vorgegebene Zeitdauer kann abhängig von einem Typ der Topologieänderungsinformation TAI, wie z.B. Linkleitungsausfall, Linkleitungsinbetriebnahme, Leitwegänderung oder Policingänderung, und/oder abhängig von der Netzkomplexität oder der Anzahl der Netzknotendurchgänge im Bereich der Topologieänderung gewählt werden. Ein Ablauf des Zeitgliedes wird als Ende der Inkonsistenzphase interpretiert.

Sobald der Ressourcenmanager RM1 das Ende der Inkonsistenzphase erkennt, werden durch den Ressourcenmanager RM1 neue, die geänderte Topologie spezifizierende Topologiedaten NTD erfasst, die ihm vom Topologiemanager TM übermittelt werden. Vorzugsweise übermittelt der Topologiemanager TM nur diejeni gen Topologiedaten NTD, die sich gegenüber den ursprünglichen, in der Topologiedatenbank TDB gespeicherten Topologiedaten TD geändert haben. Die neuen Topologiedaten NTD werden in der Topologiedatenbank TDB des Ressourcenmanagers RM1 gespeichert, wodurch die Topologiedatenbank TDB aktualisiert und das Topologiebild des Ressourcenmanagers RM1 in Einklang mit der geänderten Topologie der Ressourcenmanager-Domäne RD1 gebracht wird.

Anschließend werden im Rahmen der geänderten Topologie verfügbare Übertragungsressourcen durch diejenigen Übertragungsressourcen, die bestehenden Verbindungen garantiert wurden, neu belegt. Auf diese Weise wird die Belegungsdatenbank BDB des Ressourcenmanagers RM1 aktualisiert. Um dabei Überbelegungen zu vermeiden, kann folgendermaßen verfahren werden:
- Falls Verbindungen unterschiedlichen Typs, z.B. Video- und Sprachverbindungen, über eine vom Ressourcenmanager RM1 verwaltete Verkehrsklasse geführt werden, werden zuerst die Sprachverbindungen belegt.
- Jüngere Verbindungen werden gegenüber älteren Verbindungen bevorzugt.
- Verbindungen, die eine benutzer- oder leistungsmerkmalabhängige Verbindungspriorität aufweisen, werden bevorzugt.
- Verbindungen, die Kodierungen mit geringerem Ressourcenbedarf verwenden, werden bevorzugt.
- Verbindungen, die außerhalb des statischen Ressourcenbelegungsmodus aufgebaut wurden, werden gegenüber während des statischen Ressourcenbelegungsmodus aufgebauten Verbindungen bevorzugt.
- Verbindungen werden dazu veranlasst, eine höher komprimierende Kodierung zu verwenden.

Falls dennoch eine Überbelegung auftritt, können zur Überbelegung beitragende Verbindungen zwangsweise ausgelöst werden.

## Patentansprüche

1. Verfahren zur Kontrolle von Übertragungsressourcen eines paketorientierten Kommunikationsnetzes (RD1, RD2, RD) bei Topologieänderungen, wobei
a) ein Ressourcenmanager (RM1, RM2, RM) eine Belegung der Übertragungsressourcen anhand von die Topologie des Kommunikationsnetzes (RD1, RD2, RD) betreffenden Topologiedaten (TD) kontrolliert,
b) infolge einer Topologieänderung des Kommunikationsnetzes (RD1, RD2, RD) eine Topologieänderungsinformation (TAI) zum Ressourcenmanager (RM1, RM2, RM) übermittelt wird,
c) der Ressourcenmanager (RM1, RM2, RM) infolge des Empfangs der Topologieänderungsinformation (TAI) vorübergehend in einen statischen Ressourcenbelegungsmodus übergeht sowie die geänderte Topologie des Kommunikationsnetzes (RD1, RD2, RD) betreffende, neue Topologiedaten (NTD) erfasst, und
d) der Ressourcenmanager (RM1, RM2, RM) eine bestehende Belegung der Übertragungsressourcen anhand der neuen Topologiedaten (NTD) auf die geänderte Topologie abbildet.

2. Verfahren nach Anspruch 1,
**dadurch gekennzeichnet,**
**dass** ein Empfang einer weiteren Topologieänderungsinformation während des statischen Ressourcenbelegungsmodus diesen um eine vorgegebene Zeitdauer verlängert.

3. Verfahren nach einem der vorhergehenden Ansprüche,
**dadurch gekennzeichnet,**
**dass** der Ressourcenmanager (RM1, RM2, RM) nach der Erfassung der neuen Topologiedaten oder nach der Abbildung der bestehenden Ressourcenbelegung auf die geänderte Topologie den statischen Ressourcenbelegungsmodus verlässt.

4. Verfahren nach einem der vorhergehenden Ansprüche,
**dadurch gekennzeichnet,**
**dass** eine während des statischen Ressourcenbelegungsmodus erfolgende Ressourcenbelegung durch den Ressourcenmanager (RM1, RM2, RM) spezifisch markiert wird.

5. Verfahren nach einem der vorhergehenden Ansprüche,
**dadurch gekennzeichnet,**
**dass** die Belegung der Übertragungsressourcen im statischen Ressourcenbelegungsmodus auf den vor der Topologieänderung vorliegenden Topologiedaten (TD) basiert.

6. Verfahren nach einem der vorhergehenden Ansprüche,
**dadurch gekennzeichnet,**
**dass** der Ressourcenmanager (RM1, RM2, RM) im statischen Ressourcenbelegungsmodus unabhängig von der Belegung der Übertragungsressourcen Ressourcenanforderungen ablehnt und Ressourcenfreigaben zulässt.

7. Verfahren nach einem der vorhergehenden Ansprüche,
**dadurch gekennzeichnet,**
**dass** mit der Topologieänderungsinformation eine Lokalisierungsangabe übermittelt wird, durch die ein von der Topologieänderung betroffener Bereich des Kommunikationsnetzes (RD1, RD2, RD) spezifiziert wird.

8. Verfahren nach Anspruch 7 soweit dieser von einem der Ansprüche 1 bis 4 abhängt,
**dadurch gekennzeichnet,**
**dass** der Ressourcenmanager (RM1, RM2, RM) im statischen Ressourcenbelegungsmodus
Ressourcenanforderungen, die den durch die Lokalisierungsangabe spezifizierten Bereich betreffen, unabhängig von der Belegung der Übertragungsressourcen ablehnt und Ressourcenanforderungen, die den durch die Lokalisierungsangabe spezifizierten Bereich nicht betreffen, anhand der vor der Topologieänderung vorliegenden Belegung der Übertragungsressourcen bearbeitet.

9. Verfahren nach einem der vorhergehenden Ansprüche,
**dadurch gekennzeichnet,**
**dass** der Ressourcenmanager (RM1, RM2, RM) im Rahmen der Abbildung der bestehenden Ressourcenbelegung auf die geänderte Topologie prüft, ob eine Überbelegung von Übertragungsressourcen auftritt.

10. Verfahren nach Anspruch 9,
**dadurch gekennzeichnet,**
**dass** der Ressourcenmanager (RM1, RM2, RM) bei Feststellen einer Überbelegung veranlasst, dass eine zu dieser Überbelegung beitragende Verbindung abgebaut wird, einer anderen Dienstgüteklasse zugeordnet wird, über einen anderen Leitweg geführt wird oder eine Kodierung mit verringertem Ressourcenbedarf verwendet.

11. Verfahren nach einem der vorhergehenden Ansprüche,
**dadurch gekennzeichnet,**
**dass** die Topologie des Kommunikationsnetzes (RD1, RD2, RD, TMD) betreffende Topologiedaten durch einen Topologiemanager (TM) erfasst und zum Ressourcenmanager (RM1, RM2, RM) übermittelt werden.

## Claims

1. Method for checking transmission resources of a packet-oriented communication network (RD1, RD2, RD) where there are changes in topology, wherein
a) a resource manager (RM1, RM2, RM) checks an occupancy of the transmission resources by way of topology data (TD) relating to the topology of the communication network (RD1, RD2, RD),
b) as a result of a topology change of the communication network (RD1, RD2, RD), topology change information (TAI) is transmitted to the resource manager (RM1, RM2, RM),
c) as a result of receiving the topology change information (TAI), the resource manager (RM1, RM2, RM) transfers temporarily into a static resource occupancy mode and records new topology data (NTD) relating to the changed topology of the communication network (RD1, RD2, RD) and
d) the resource manager (RM1, RM2, RM) maps an existing occupancy of the transmission resources to the changed topology by way of the new topology data (NTD).

2. Method according to Claim 1, **characterized in that** receipt of further topology change information during the static resource occupancy mode extends said static resource occupancy mode by a predetermined period.

3. Method according to one of the preceding claims, **characterized in that** after recording the new topology data or after mapping the existing resource occupancy to the changed topology, the resource manager (RM1, RM2, RM) leaves the static resource occupancy mode.

4. Method according to one of the preceding claims, **characterized in that** a resource occupancy made during the static resource occupancy mode is marked specifically by the resource manager (RM1, RM2, RM).

5. Method according to one of the preceding claims, **characterized in that** the occupancy of the transmission resources in the static resource occupancy mode is based on the topology data (TD) existing before the topology change.

6. Method according to one of the preceding claims, **characterized in that** in the static resource occupancy mode the resource manager (RM1, RM2, RM) rejects resource requests and allows resource releases irrespective of the occupancy of the transmission resources.

7. Method according to one of the preceding claims, **characterized in that** with the topology change information a localization specification is transmitted, by means of which a region of the communication network (RD1, RD2, RD) affected by the topology change is specified.

8. Method according to Claim 7 in so far as this depends on one of Claims 1 to 4, **characterized in that** in the static resource occupancy mode, the resource manager (RM1, RM2, RM) rejects resource requests that relate to the region specified by the localization specification irrespective of the occupancy of the transmission resources and processes resource requests that do not relate to the region specified by the localization specification by way of the occupancy of the transmission resources existing before the topology change.

9. Method according to one of the preceding claims, **characterized in that**, within the framework of the mapping of the existing resource occupancy, the resource manager (RM1, RM2, RM) checks the changed topology to see whether the transmission resources are overloaded.

10. Method according to Claim 9, **characterized in that** upon establishing an overload, the resource manager (RM1, RM2, RM) causes a connection contributing to said overload to be cleared, to be assigned to another class of service, to be carried via another route or uses a coding with reduced resource requirements.

11. Method according to one of the preceding claims, **characterized in that** topology data relating to the topology of the communication network (RD1, RD2, RD, TMD) is recorded by a topology manager TM and is transmitted to the resource manager (RM1, RM2, RM).

## Revendications

1. Procédé de contrôle des ressources de transmission d'un réseau de communication à commutation de paquets (RD1, RD2, RD) en cas de changements de topologie, dans lequel
a) un gestionnaire de ressources (RM1, RM2, RM) contrôle une occupation des ressources de transmission à l'aide de données de topologie (TD) concernant la topologie du réseau de communication (RD1, RD2, RD),
b) suite à un changement de topologie du réseau de communication (RD1, RD2, RD), une information de changement de topologie (TAI) est transmise au gestionnaire de ressources (RM1, RM2, RM),
c) suite à la réception de l'information de changement de topologie (TAI), le gestionnaire de ressources (RM1, RM2, RM) passe provisoirement à un mode statique d'occupation de ressources et détecte de nouvelles données de topologie (NTD) concernant la topologie changée du réseau de communication (RO1, RD2, RD), et
d) le gestionnaire de ressources (RM1, RM2, RM) représente à l'aide des nouvelles données de topologie (NTD) une occupation existante des ressources de transmission sur la topologie changée.

2. Procédé selon la revendication 1,
**caractérisé en ce**
**qu'**une réception d'une information de changement de topologie supplémentaire au cours du mode statique d'occupation de ressources prolonge celui-ci d'une durée prédéfinie.

3. Procédé selon l'une quelconque des revendications précédentes,
**caractérisé en ce**
**qu'**après avoir détecté les nouvelles données de topologie ou après avoir représenté l'occupation de ressources existante sur la topologie changée, le gestionnaire de ressources (RM1, RM2, RM) quitte le mode statique d'occupation de ressources.

4. Procédé selon l'une quelconque des revendications précédentes,
**caractérisé en ce**
**qu'**une occupation de ressources survenant pendant le mode statique d'occupation de ressources est identifiée spécifiquement par le gestionnaire de ressources (RM1, RM2, RM).

5. Procédé selon l'une quelconque des revendications précédentes,
**caractérisé en ce**
**que** l'occupation des ressources de transmission dans le mode statique d'occupation de ressources est basée sur les données de topologie (TD) présentes avant le changement de topologie.

6. Procédé selon l'une quelconque des revendications précédentes,
**caractérisé en ce**
**que** dans le mode statique d'occupation de ressources, le gestionnaire de ressources (RM1, RM2, RM) rejette des demandes de ressources et admet des libérations de ressources, indépendamment de l'occupation des ressources de transmission.

7. Procédé selon l'une quelconque des revendications précédentes,
**caractérisé en ce**
**qu'**avec l'information de changement de topologie, une indication de localisation est transmise, qui spécifie une zone du réseau de communication (RD1, RD2, RD), affectée par le changement de topologie.

8. Procédé selon la revendication 7 dans la mesure où elle dépend de l'une quelconque des revendications 1 à 4,
**caractérisé en ce**
**que** dans le mode statique d'occupation de ressources, le gestionnaire de ressources (RM1, RM2, RM) rejette des demandes de ressources concernant la zone spécifiée par l'indication de localisation, indépendamment de l'occupation des ressources de transmission, et traite des demandes de ressources ne concernant pas la zone spécifiée par l'indication de localisation, à l'aide de l'occupation des ressources de transmission présente avant le changement de topologie.

9. Procédé selon l'une quelconque des revendications précédentes,
**caractérisé en ce**
**que** dans le cadre de la représentation de l'occupation de ressources existante sur la topologie changée, le gestionnaire de ressources (RM1, RM2, RM) vérifie s'il se produit une suroccupation des ressources de transmission.

10. Procédé selon la revendication 9,
**caractérisé en ce**
**que** si une suroccupation est constatée, le gestionnaire de ressources (RM1, RM2, RM) fait qu'une communication contribuant à cette suroccupation soit coupée, attribuée à une autre classe de qualité de service, acheminée par un routage différent ou qu'un codage avec des besoins en ressources inférieurs soit utilisé.

11. Procédé selon l'une quelconque des revendications précédentes,
**caractérisé en ce**
**que** les données de topologie concernant la topologie du réseau de communication (RD1, RD2, RD, TMD) sont détectées par un gestionnaire de topologie (TM) et transmises au gestionnaire de ressources (RM1, RM2, RM).
